# EUROPÄISCHE PATENTSCHRIFT

(11) **EP 3 790 940 B1**
(45) Veröffentlichungstag und Bekanntmachung des Hinweises auf die Patenterteilung: **26.11.2025**
(21) Anmeldenummer: 19737708.8
(22) Anmeldetag: 05.07.2019
(51) Int. Cl.: C09J 7/40, B32B 27/08, B32B 7/12

(54) **RELEASELINER MIT PARTIELLER SILIKONBESCHICHTUNG**
RELEASE LINER HAVING PARTIAL SILICON COATING
FILM ANTIADHÉSIF PARTIELLEMENT REVÊTU DE SILICONE

(30) Priorität: 17.07.2018 DE 102018211824
(43) Veröffentlichungstag der Anmeldung: 17.03.2021
(73) Patentinhaber: tesa SE, 22848 Norderstedt (DE)
(72) Erfinder: WIECK, Andreas, 25469 Halstenbek (DE); ZIEBARTH, Felix, 22850 Norderstedt (DE)
(74) Vertreter: tesa SE
(86) Internationale Anmeldenummer: PCT/EP2019/068141
(87) Internationale Veröffentlichungsnummer: WO 2020/016031

(56) Entgegenhaltungen:
- EP-A1- 2 851 405
- EP-A1- 3 278 984
- DE-A1- 102008 027 502
- US-A- 5 061 535

## Beschreibung

Die Erfindung betrifft das technische Gebiet der Releaseliner, wie sie häufig zum Schutz von Haftklebmassen verwendet werden. Spezifischer betrifft die Erfindung einen Releaseliner, der auf einer Seite durchgehend und auf der anderen Seite partiell silikonisiert ist. Dies ermöglicht beispielsweise das Aufbringen eines Anfassers auf der partiell silikonisierten Seite bei minimierter Beeinträchtigung der Trennwirkung.

Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Haftklebmassen miteinander in Kontakt kommen, oder um bei einseitig klebenden Klebebändern ein leichteres Abrollen zu gewährleisten, wird die Klebmasse vor dem Wickeln des Klebebandes mit einem Abdeckmaterial (auch als Trennmaterial bezeichnet) bedeckt. Dem Fachmann sind derartige Abdeckmaterialien unter den Namen Releaseliner oder Liner bekannt. Neben der Abdeckung von ein- oder doppelseitig klebenden Klebebändern werden Liner auch zur Eindeckung von Etiketten eingesetzt.

Die Releaseliner sorgen des Weiteren dafür, dass die Klebmasse vor der Anwendung nicht verschmutzt wird. Zusätzlich können Releaseliner über die Art und Zusammensetzung der Releasematerialien so eingestellt werden, dass das Klebeband mit der gewünschten Kraft (leicht oder schwer) abgerollt werden kann. Bei beidseitig mit Klebmasse beschichteten Klebebändern sorgen die Releaseliner zusätzlich dafür, dass beim Abrollen die richtige Seite der Klebemasse zuerst freigelegt wird.

Ein Liner oder Releaseliner ist nicht Bestandteil eines Klebebandes oder Etiketts, sondern nur ein Hilfsmittel zu deren Herstellung, Lagerung oder für die Weiterverarbeitung. Darüber hinaus ist ein Liner im Gegensatz zu einem Klebebandträger nicht fest mit einer Klebstoffschicht verbunden.

Als Releaseliner werden industriell Papier- oder Folienträger verwendet, die mit einer abhäsiven Beschichtungsmasse (auch als dehäsive oder anti-adhäsive Masse bezeichnet) ausgerüstet werden, um die Adhäsionsneigung von adhärierenden Produkten gegenüber diesen Oberflächen zu verringern (trennwirksame Funktion). Als abhäsive Beschichtungsmassen, die auch Releasebeschichtung genannt werden, können eine Vielzahl verschiedener Stoffe eingesetzt werden: Wachse, fluorierte oder teilfluorierte Verbindungen und insbesondere Silikone sowie verschiedene Copolymere mit Silikon-Anteilen. In den letzten Jahren haben sich Silikone als Releasematerialien im Bereich der Klebeband-Anwendung auf Grund ihrer guten Prozessierbarkeit, niedrigen Kosten und des breiten Eigenschaftsprofils weitgehend durchgesetzt.

Daneben sind auch Liner mit Polyolefin-Trennschichten in den Fokus des Interesses gerückt.

So beschreibt EP 2 354 203 A1 ein Klebeband, das bei Temperaturen von mindestens 90 °C genutzt werden kann und eine Haftklebmasseschicht mit einem darauf aufgebrachten Releaseliner umfasst. Der Releaseliner umfasst seinerseits eine Basisschicht, die ein Polyolefinharz enthält, und eine Trennschicht (Releaseschicht), die LDPE enthält und sich in Kontakt mit der Haftklebmasseschicht befindet.

EP 2 025 507 A1 beschreibt ein Trennmittel, das ein Ethylen-multi-Blockcopolymer enthält, wobei das Ethylen-multi-Blockcopolymer aus Hartsegmentblöcken, die mindestens 95 % (w/w) Ethylen und ein Comonomer enthalten, und aus Weichsegmentblöcken, die Ethylen und ein Comonomer enthalten, besteht; und wobei der Anteil an Comonomer in den Weichsegmentblöcken zwischen 10 und 20 Mol-% liegt und der Anteil an den Hartsegmentblöcken im Ethylen-multi-Blockcopolymer höchstens 45 % (w/w) beträgt.

EP 2 298 844 A1 beschreibt ein Acrylat-Klebeband mit einem Releaseliner, der eine LDPE-Oberflächenschicht; ein Harzgemisch, das LDPE und HDPE als Harzkomponenten enthält, als zweite Oberflächenschicht; und eine HDPE-Zwischenschicht enthält. EP 3 278 984 A1 zeigt einen Releaseliner zur Verwendung auf Haftklebmassen, umfassend- eine außen liegende, durchgehende Silikon-Releaseschicht (SR1); eine Folie (BF), enthaltend zu mindestens 80 Gew.-%, bezogen auf das Gesamtgewicht der Folie, ein Polyolefin oder Polyethylenterephthalat und eine Schicht (PER), enthaltend zu mindestens 80 Gew.-%, bezogen auf das Gesamtgewicht der Schicht (PER), Polyethylen.

EP 2 851 405 A1 offenbart einen Releaseliner für Haftklebemassen z.B. auf Basis von Silikon, umfassend eine außen liegende, durchgehende Silikon-Releaseschicht; eine einschichtige Trägerschicht auf Basis von PET, PE oder PP, eine weitere auf der anderen Außenseite liegende Silikon-Trennschicht, die durch lokale Inhibition der Silikon-Vernetzungsreaktion gebildete Fehlstellen aufweist, die die Form von Kreisen, Lamellen, etc, einnehmen kann.

Um das in der Regel unmittelbar vor der Applikation stattfindende Entfernen eines Releaseliners vom Klebeband zu erleichtern, werden die Liner gelegentlich auf ihrer Rückseite (der Abrollseite) mit Anfasshilfen, so genannten "Tabs" versehen. Diese erleichtern das Abziehen des Liners insofern, als nicht erst zwischen Liner und Klebmasse eingedrungen werden muss, um ein Stück Liner greifen und nachfolgend den Liner weiter abziehen zu können; vielmehr genügt ein Greifen des Tabs, um den Liner problemlos entfernen zu können. Zu diesem Zweck werden die Tabs auf die Linerrückseite derart aufgeschweißt oder angeklebt, dass ein greifbarer Teil des Tabs nicht mit dem Liner verbunden ist, sondern von dessen Oberfläche absteht oder lose auf dieser aufliegt. Derartige Anfasshilfen sind beispielsweise in EP 2 426 185 A1 beschrieben.

DE 38 44 250 A1 beschreibt ein Verfahren zum Versehen einer Trägeroberfläche mit einer Trennmittelbeschichtung derart, dass in Form eines Rasters Teilflächen mit unterschiedlichen Trennkraftwerten gebildet werden. Zu diesem Zweck werden durch Aufdrucken des Trennmaterials in definierter geometrischer Weise auf Teilflächen der Trägeroberfläche Trennschichten gebildet und andere Teilflächen in ihrem ursprünglichen Zustand belassen.

Ähnliche Releaseartikel sind Gegenstand von US 5,061,535.

DE 2016 213 661 A1 beschreibt einen thermisch stabilen Releaseliner, der mit einer Anfasshilfe versehen werden kann. Dieser Releaseliner umfasst eine außen liegende Silikon-Releaseschicht, eine Lage aus mehreren Polyolefin-basierten Schichten und eine außen liegende, Polyethylen-basierte Schicht, die durch einen Klebstoff mit der im Aufbau des Liners nächstfolgenden Schicht verbunden ist. Wie sich gezeigt hat, ergeben sich bei Verwendung der in DE 2016 213 661 A1 beschriebenen Liner Probleme hinsichtlich der aufzuwendenden Abzugskräfte mit Klebmassen, die auch auf niederenergetischen Untergründen gute Klebleistungen erbringen.

Wie sich gezeigt hat, sind die Möglichkeit, auf einfache Weise einen Anfasser an einem Liner anzubringen, und eine gute Trennwirkung gegenüber stark klebenden Haftklebmassen häufig gegensätzliche Anforderungen. Eine gute Trennwirkung führt oft dazu, dass sich ein Anfasser-Tab nur schwierig auf dem Liner aufbringen lässt und umgekehrt.

Aufgabe der Erfindung ist es, hier Abhilfe zu schaffen und einen Releaseliner zur Verfügung zu stellen, der beidseitig eine ausreichende Trennwirkung gerade gegenüber Haftklebmassen mit guter Klebkraft auch auf niederenergetischen Substraten aufweist und zudem mit einer Anfasshilfe versehen und mittels dieser problemlos von der Klebmasse abgezogen werden kann.

Die Lösung der Aufgabe beruht auf dem Grundgedanken der Erfindung, einen Liner mit speziellem Schichtaufbau und unterschiedlicher Silikonisierung zur Verfügung zu stellen. Ein erster und allgemeiner Gegenstand der Erfindung ist ein Releaseliner zur Verwendung auf Haftklebmassen, der
- eine außen liegende, durchgehende Silikon-Releaseschicht (SR1);
- eine Folie (BF), die zu mindestens 80 Gew.-%, bezogen auf das Gesamtgewicht der Folie, ein Polyolefin oder Polyethylenterephthalat enthält;
- eine Schicht (PER), die zu mindestens 80 Gew.-%, bezogen auf das Gesamtgewicht der Schicht (PER), Polyethylen enthält; und
- eine auf der Schicht (PER) aufliegende, außen liegende Silikon-Releaseschicht (SR2) umfasst,
wobei die Schicht (SR2) derart Fehlstellen aufweist, dass 46 bis 95 % der Oberfläche der Schicht (PER) mit der Schicht (SR2) bedeckt sind.

Erfindungsgemäße Liner weisen gute Trennkräfte insbesondere gegenüber Haftklebmassen mit relativ hoher Klebkraft auf niederenergetischen Substraten auf, sie sind mit diesen also leicht händelbar. Dies betrifft sowohl das Entfernen des Liners von der Haftklebmasse - das eigentliche "Abziehen" - als auch das "Abrollen" eines zu einer Tellerrolle oder Spule aufgewickelten Verbunds aus Haftklebmasse und Releaseliner, wobei die Haftklebmasse im abgerollten Zustand insbesondere auf der durchgehend silikonisierten Seite des Liners aufliegt. Auf der mit der Silikonschicht (SR2) überzogenen Seite erfindungsgemäßer Liner ließen sich ein oder mehrere Anfasser-Tabs, z.B. aus einem PET/PE- oder einem Aluminium/PET/PE-Verbund, thermisch anschweißen oder mit einer Silikon-basierten Klebmasse verkleben.

Unter einer "Haftklebmasse" wird erfindungsgemäß, wie allgemein üblich, ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art des Haftklebstoffs, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' = (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) •sin(δ) (τ = Schubspannung, γ = Deformation, δ = Phasenwinkel = Phasenverschiebung zwischen Schubspannungs- und Deformationsvektor).

Ein Stoff gilt insbesondere dann als haftklebrig und wird im Sinne der Erfindung insbesondere dann als haftklebrig definiert, wenn bei Raumtemperatur, hier definitionsgemäß bei 23°C, im Deformationsfrequenzbereich von 10° bis 10¹ rad/sec G' zumindest zum Teil im Bereich von 10³ bis 10⁷ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich 10⁰ bis einschließlich 10¹ rad/sec (Abszisse) sowie den Bereich der G'-Werte von einschließlich 10³ bis einschließlich 10⁷ Pa (Ordinate) aufgespannt wird. Für G" gilt dies entsprechend.

Unter einer "außen liegenden Schicht" wird verstanden, dass die betreffende Schicht eine der beiden den Schichtaufbau des Liners nach außen begrenzenden Schichten bildet, d.h. über dieser Schicht befindet sich keine weitere zum Liner gehörende Schicht mehr.

Unter einer "durchgehenden Schicht" wird verstanden, dass die betreffende Schicht keine Fehlstellen aufweist, sondern die unter ihr liegende Schicht vollflächig bedeckt. Somit enthält eine durchgehende Schicht keine Stelle, an der ihre Unterlage freiliegt. Eine durchgehende Schicht lässt sich in diesem Sinne auch als "kontinuierliche Schicht" bezeichnen.

Die Silikon-Releaseschicht (SR1) lässt sich bevorzugt auf ein vernetzbares Silikonsystem zurückführen. Zu diesen vernetzbaren Silikonsystemen zählen Mischungen aus Vernetzungskatalysatoren bzw. -initiatoren und so genannten thermisch härtbaren, kondensations- oder additionsvernetzenden Polysiloxanen oder strahlungsinduziert vernetzenden Polysiloxanen. Die Silikon-Releaseschicht (SR1) lässt sich bevorzugt auf ein strahlungs- (UV- oder Elektronenstrahl-), kondensations- oder additionsvernetzendes System zurückführen, besonders bevorzugt auf ein additionsvernetzendes System.

Die Silikon-Releaseschicht kann auf lösungsmittelhaltige und/oder lösungsmittelfreie Systeme zurückgeführt werden, bevorzugt lässt sie sich auf ein lösungsmittelhaltiges System zurückführen.

Silikonbasierende Trennmittel auf additionsvernetzender Basis lassen sich in der Regel durch Hydrosilylierung härten. Die Formulierungen zum Herstellen dieser Trennmittel umfassen üblicherweise die folgenden Bestandteile:
- ein Alkenylgruppen enthaltendes, lineares oder verzweigtes Polydiorganosiloxan,
- ein Polyorganowasserstoffsiloxan-Vernetzungsmittel sowie
- einen Hydrosilylierungskatalysator.

Als Katalysatoren für additionsvernetzende Silikonsysteme (Hydrosilylierungs-Katalysatoren) haben sich insbesondere Platin oder Platinverbindungen, wie zum Beispiel der Karstedt-Katalysator (eine Pt(0)-Komplexverbindung) bewährt.

Spezieller können derartige additionsvernetzende Trennbeschichtungen folgende Komponenten umfassen:
a) ein lineares oder verzweigtes Dimethylpolysiloxan, welches aus ca. 80 bis 200 Dimethylpolysiloxan-Einheiten besteht und an den Kettenenden mit Vinyldimethylsiloxy-Einheiten abgestoppt ist. Typische Vertreter sind zum Beispiel lösungsmittelfreie, additionsvernetzende Silikonöle mit endständigen Vinylgruppen, wie Dehesive^{®} 921 oder 610, beide kommerziell erhältlich bei der Wacker-Chemie GmbH;
b) einen linearen oder verzweigten Vernetzer, welcher entweder nur Methylhydrogensiloxy-Einheiten in der Kette aufweist (Homopolymer-Vernetzer) oder aus Methylhydrogensiloxy- und Dimethylsiloxy-Einheiten zusammengesetzt ist (Copolymer-Vernetzer), wobei die Kettenenden entweder mit Trimethylsiloxy-Gruppen oder Dimethylhydrogensiloxy-Gruppen abgesättigt sind. Typische Vertreter dieser Produktklasse sind zum Beispiel Hydrogenpolysiloxane mit hohem Gehalt an reaktivem Si-H wie die Vernetzer V24, V90 oder V06, welche bei der Wacker-Chemie GmbH kommerziell erhältlich sind;
c) ein Silikon-MQ-Harz, welches als M-Einheit neben den üblicherweise verwendeten Trimethylsiloxy-Einheiten auch über Vinyldimethylsiloxy-Einheiten verfügt. Typische Vertreter dieser Gruppe sind zum Beispiel die Trennkraftregler CRA^{®} 17 oder CRA^{®} 42, kommerziell erhältlich bei der Wacker-Chemie GmbH;
d) einen silikonlöslichen Platinkatalysator wie zum Beispiel einen Platindivinyltetramethyldisiloxan-Komplex, welcher üblicherweise als Karstedt-Komplex bezeichnet wird und beispielsweise unter der Bezeichnung Katalysator OL bei der Wacker-Chemie GmbH kommerziell erhältlich ist.

Silikonhaltige Systeme zur Herstellung von Trennbeschichtungen lassen sich, beispielsweise bei Dow Corning, Wacker oder Momentive, kommerziell erwerben.

Beispielhaft sei "Dehesive^{®} 914" genannt, das ein Vinylpolydimethylsiloxan, den Vernetzer "Crosslinker V24", ein Methylhydrogenpolysiloxan und den Katalysator "Catalyst Ol", einen Platin-Katalysator in Polydimethylsiloxan, enthält. Dieses System ist bei der Wacker-Chemie GmbH erhältlich.

Verwendbar ist des Weiteren zum Beispiel das additionsvernetzende Silikon-Release-System "Dehesive^{®} 940A" der Wacker-Chemie mit einem zugehörigen Katalysatorsystem.

Üblicherweise wird ein Silikon-Release-System im unvernetzten Zustand aufgetragen und nachträglich vernetzt.

Von den genannten Silikonen haben die additionsvernetzenden Silikone die größte ökonomische Bedeutung. Eine unerwünschte Eigenschaft dieser Systeme ist allerdings ihre Empfindlichkeit gegenüber Katalysatorgiften, wie zum Beispiel Schwermetall-, Schwefel- und Stickstoffverbindungen (vgl. hierzu "Chemische Technik, Prozesse und Produkte" von R. Dittmeyer et al., Band 5, 5. Auflage, Wiley-VCH, Weinheim, Deutschland, 2005, Kapitel 6-5.3.2, Seite 1142). Allgemein gilt, dass Elektronendonatoren als Platingifte angesehen werden können (A. Colas, Silicone Chemistry Overview, Technical Paper, Dow Corning). Demnach sind auch Phosphorverbindungen wie Phosphine und Phosphite als Platingifte anzusehen. Die Präsenz von Katalysatorgiften führt dazu, dass die Vernetzungsreaktion zwischen den unterschiedlichen Bestandteilen eines Silikontrennmittels nicht mehr oder nur zu einem geringen Teil stattfindet. Daher wird bei der Herstellung von antiadhäsiven Silikonbeschichtungen die Anwesenheit von Katalysatorgiften, insbesondere von Platingiften, in der Regel streng vermieden.

Besondere Ausführungen der Silikonsysteme sind Polysiloxan-Blockcopolymere, zum Beispiel mit Harnstoff-Block, wie sie von der Firma Wacker unter dem Handelsnamen "Geniomer" angeboten werden, oder Trennsysteme aus Fluorsilikonen, die insbesondere bei Klebebändern mit Silikonklebmassen eingesetzt werden.

Weiterhin können auch photoaktive Katalysatoren, so genannte Photoinitiatoren, in Kombination mit UV-härtbaren, kationisch vernetzenden Siloxanen auf Epoxid- und/oder Vinyletherbasis beziehungsweise mit UV-härtbaren, radikalisch vernetzenden Siloxanen wie etwa acrylatmodifizierten Siloxanen verwendet werden. Ebenso ist die Verwendung von elektronenstrahlhärtbaren Silikonacrylaten möglich.

Auch photopolymerisierbare Organopolysiloxanmassen können verwendet werden. Genannt seien beispielsweise Massen, die durch die Reaktion zwischen Organopolysiloxanen, die mit (Meth)acrylatgruppen substituierte, direkt an Siliziumatome gebundene Kohlenwasserstoffreste aufweisen, in Gegenwart eines Photosensibilisators vernetzt werden (siehe z.B. EP 0 168 713 B1 oder DE 38 20 294 C1). Ebenfalls verwendbar sind Massen, bei denen die Vernetzungsreaktion zwischen Organopolysiloxanen, die mit Mercaptogruppen substituierte, direkt an Siliziumatome gebundene Kohlenwasserstoffreste aufweisen, und Organopolysiloxanen mit direkt an Siliziumatome gebundenen Vinylgruppen in Gegenwart eines Photosensibilisators erfolgt. Solche Massen werden beispielsweise in der US 4,725,630 beschrieben.

Beim Einsatz von zum Beispiel in der DE 33 16 166 C1 beschriebenen Organopolysiloxanmassen, die mit Epoxygruppen substituierte, direkt an Siliziumatome gebundene Kohlenwasserstoffreste aufweisen, wird die Vernetzungsreaktion durch Freisetzung einer katalytischen Säuremenge induziert, die durch Photozersetzung zugesetzter Oniumsalzkatalysatoren erhalten wird. Andere durch einen kationischen Mechanismus härtbare Organopolysiloxanmassen sind Materialien, welche zum Beispiel Propenyloxysiloxanendgruppen aufweisen.

Die Silikonsysteme können je nach Verwendungszweck auch weitere Zusätze, zum Beispiel Stabilisatoren oder Verlaufshilfsmittel, enthalten.

Der erfindungsgemäße Releaseliner enthält eine Folie (BF). Bevorzugt ist die Folie (BF) ausgewählt aus der Gruppe bestehend aus Polyamid-, Polyimid-, Polyurethan-, Polymethylmethacrylat-, Polymilchsäure-, Polystyrol-, Polyolefin- und Polyesterfolien. Besonders bevorzugt ist die Folie (BF) eine Polyolefinfolie oder eine Polyesterfolie, insbesondere eine Polyethylenfolie, eine Polypropylenfolie oder eine Polyethylenterephthalatfolie oder eine Folie aus einem Blend zweier oder mehrerer Polyolefine, beispielsweise eine Folie aus einem Polyethylen-Polypropylen-Blend.

Bevorzugt enthält die Folie (BF) zu insgesamt mindestens 80 Gew.-%, bezogen auf das Gesamtgewicht der Folie, Polyethylen und Polypropylen.

In einer Ausführungsform ist die Folie (BF) eine Mehrschichtfolie, bevorzugt ein Coextrudat aus zwei oder mehreren Schichten.

Besonders bevorzugt ist die Folie (BF) eine Dreischichtfolie, deren zentrale Schicht zu mindestens 60 Gew.-%, stärker bevorzugt zu mindestens 65 Gew.-%, insbesondere zu mindestens 70 Gew.-%, beispielsweise zu mindestens 75 Gew.-%, jeweils bezogen auf das Gesamtgewicht der Schicht, Polypropylen enthält. Es hat sich gezeigt, dass sich derartige Polypropylengehalte vorteilhaft auf die thermische Stabilität der zentralen Schicht, der Dreischichtfolie und letztlich des erfindungsgemäßen Releaseliners auswirken. Besonders bevorzugt besteht die zentrale Schicht aus Polypropylen, das zu maximal 15 Gew.-%, stärker bevorzugt zu maximal 12 Gew.-% mit Kautschuk und zu maximal 15 Gew.-%, stärker bevorzugt zu maximal 10 Gew.-%, mit Farbmitteln abgemischt ist. Die zentrale Schicht der Folie (BF) kann mittels Pigmenten oder organischem Farbstoff, die in Form eines Farbmasterbatches zugegeben wurden, eingefärbt sein.

Insbesondere besteht die zentrale Schicht der Folie (BF) aus einem heterophasic Polypropylen-Copolymer mit einem Kautschukanteil von maximal 15 Gew.-% und einem Farbmittelanteil von maximal 15 Gew.-%, stärker bevorzugt mit einem Kautschukanteil von maximal 12 Gew.-% und einem Farbmittelanteil von maximal 10 Gew.-%. Der Kautschuk ist bevorzugt ein EPM-Kautschuk.

Besonders bevorzugt ist die zentrale Schicht eine Polypropylenfolie mit einer Schmelztemperatur von mindestens 160 °C. Das Polypropylen der zentralen Schicht ist bevorzugt ein sogenanntes heterophasic PP-Copolymer (HECO PP, Impact PP). Ein derartiges Copolymer weist insbesondere eine hohe Temperaturstabilität auf. Die Temperaturstabilität, die sich aus der Schmelztemperatur ergibt, ist vergleichbar mit der von reinem Homo-PP. Ein heterophasic PP-Copolymer zeichnet sich aber durch eine bessere Flexibilität sowie geringere Festigkeit und geringere Sprödigkeit aus. Dies wird durch eine Copolymerisation von Homo-PP mit einem EP-Kautschuk erreicht.

Die Folie (BF) umfasst, insbesondere in der Ausführungsform als Dreischichtfolie, bevorzugt zwei äußere Schichten aus einem Polyethylen-Polypropylen-Blend. Die beiden äußeren Schichten enthalten bevorzugt jeweils mindestens 25 Gew.-%, stärker bevorzugt mindestens 30 Gew.-%, insbesondere mindestens 35 Gew.-% Polyethylen sowie jeweils mindestens 20 Gew.-%, stärker bevorzugt mindestens 30 Gew.-%, insbesondere mindestens 50 Gew.-% Polypropylen, jeweils bezogen auf das Gesamtgewicht der Schicht. Ganz besonders bevorzugt enthalten die beiden äußeren Schichten jeweils mindestens 70 Gew.-%, stärker bevorzugt mindestens 80 Gew.-%, insbesondere mindestens 90 Gew.-%, jeweils bezogen auf das Gesamtgewicht der Schicht, eines Gemischs aus Polyethylen und Polypropylen in einem Gewichtsverhältnis PP : PE von 40 : 60 bis 80 : 20, insbesondere von 50 : 50 bis 70 : 30, beispielsweise von 55 : 45 bis 65 : 35. Besonders bevorzugt bestehen die beiden äußeren Schichten jeweils aus einem solchen Gemisch aus Polypropylen und Polyethylen.

Besonders bevorzugt ist das Polypropylen der äußeren Schichten der Folie (BF) in der Ausführungsform als Mehrschicht-, insbesondere als Dreischichtfolie, ein heterophasic PP-Copolymer, z.B. ein Impact Polypropylen. Das Polyethylen der äußeren Schichten der Folie (BF) in der Ausführungsform als Mehrschicht-, insbesondere als Dreischichtfolie, ist bevorzugt ein mPE, insbesondere ein LLDPE. Über das Blendverhältnis können vorteilhaft die mechanischen Eigenschaften der Mehrschichtfolie, insbesondere ihre Festigkeit, feinjustiert werden. Die mechanischen Eigenschaften dieses Verbundes wirken sich insbesondere bei einer Beschichtung des Verbundes mit der zur Ausbildung der Schicht (SR1) vorgesehenen Silikonreleasemasse und/oder der zur Ausbildung der Schicht (PER) vorgesehenen Masse aus. Besonders positiv kommt dies bei der Applikation des erfindungsgemäßen Releaseliners zur Geltung, insbesondere bei dessen maschineller Verarbeitung und bei dessen Anwendung, wenn ein damit abgedecktes Klebeband um Kurven verklebt wird. Besonders vorteilhaft weist der Releaseliner bzw. zumindest der beschriebene Verbund eine gute Dehnfestigkeit auf und wirkt auf diese Weise einer Verstreckung bzw. Überdehnung des Klebebands bei dessen Applikation und Verarbeitung entgegen. Bemerkenswert ist, dass die Folie (BF) insofern eine besonders gute Balance zwischen den beiden gegensätzlichen Eigenschaften Dehnfähigkeit und Dehnfestigkeit erreicht.

Die Folie (BF) liegt besonders bevorzugt als coextrudierte Dreischichtfolie vor. Insbesondere wird der Verbund als Blasfolie hergestellt, kann aber auch im Flachfolienprozess als Flachfolie hergestellt werden.

Insbesondere haben in den Ausführungsformen der Folie (BF) als Mehrschichtaufbau die jeweils äußeren Schichten bevorzugt eine identische Schichtdicke, wobei herstellungs- bzw. verfahrensbedingte Abweichungen unbeachtlich sind. Derartige symmetrische Aufbauten zeigen im Gegensatz zu asymmetrischen Aufbauten keine Rollneigung, wie sie bei letzteren gerade unter Temperaturbelastung häufig beobachtet wird.

Bevorzugt weisen die Rohstoffe für die Herstellung der Folie (BF) gewichtsbezogen weniger als 1000 ppm an Katalysatorgiften bezüglich des Hydrosilylierungskatalysators der Schicht (SR1) auf. Andernfalls kann es zu Störungen der Silikonvernetzung kommen, wodurch die Releaseeigenschaften der Schicht (SR1) gestört werden können. Als Katalysatorgifte kommen insbesondere Phosphor- und Stickstoff-haltige Verbindungen, z.B. Phosphit-Stabilisatoren wie Irgafos 168 oder Irgafos TNPP, Gleitmittel oder Antistatika mit Amid- oder Amin-Funktionalitäten, z.B. Erucamid, in Frage. Besonders bevorzugt sind die Rohstoffe für die Herstellung der Folie (BF) frei von Katalysatorgiften bezüglich des Hydrosilylierungskatalysators der Schicht (SR).

In der Ausführungsform der Folie (BF) als dreischichtige Folie beträgt die Dicke der zentralen Schicht bevorzugt 40 bis 80 µm, stärker bevorzugt 50 bis 70 µm, insbesondere 55 bis 65 µm, ganz besonders bevorzugt 57 bis 63 µm. Die Dicke der beiden äußeren Schichten beträgt unabhängig voneinander jeweils bevorzugt 10 bis 30 µm, insbesondere 15 bis 25 µm, ganz besonders bevorzugt 17 bis 23 µm. Das Verhältnis der Schichtdicken der zentralen Schicht und einer der äußeren Schichten beträgt bevorzugt 10:3 bis 10:1.

Der erfindungsgemäße Liner umfasst ferner mindestens eine Schicht (PER), die zu mindestens 80 Gew.-% Polyethylen enthält. Bevorzugt enthält die Schicht (PER) zu mindestens 90 Gew.-%, stärker bevorzugt zu mindestens 95 Gew.-%, insbesondere zu mindestens 98 Gew.-%, beispielsweise zu mindestens 99 Gew.-%, jeweils bezogen auf das Gesamtgewicht der Schicht (PER), Polyethylen. Ganz besonders bevorzugt besteht die Schicht (PER) aus Polyethylen. Insbesondere ist die Schicht (PER) eine Polyethylenfolie. Die Schicht (PER) kann dabei auch aus einem Blend bzw. einer Mischung aus unterschiedlichen Polymeren bestehen.

Bevorzugt ist das Polyethylen der Schicht (PER) ein low-density-PE (LDPE). Besonders bevorzugt besteht die Schicht (PER) aus LDPE, insbesondere ist die Schicht (PER) eine LDPE-Folie. Insbesondere ist die Schicht (PER) eine LDPE-Folie mit einer Dicke von 10 bis 45 µm, ganz besonders bevorzugt mit einer Dicke von 20 bis 40 µm, beispielsweise von 24 bis 33 µm.

Bevorzugt ist die Polyethylenfolie der Schicht (PER) eine Blasfolie. Die Polyethylenfolie (PER) kann auch eine Mehrschichtfolie, z.B. eine Dreischichtfolie sein. Im letzteren Fall besteht die Folie aus drei PE-Schichten.

Das LDPE der Schicht (PER) hat bevorzugt eine Dichte von weniger als 0,925 g/cm³, insbesondere von weniger als 0,92 g/cm³. Eine derart ausgestattete Schicht (PER) weist besonders geringe Trennkräfte bzw. Abrollkräfte gegenüber vielen Haftklebmassen auf. Die Schicht (PER) weist daher auch eine besonders hohe Hitzebeständigkeit auf. Daraus wiederum ergibt sich vorteilhaft die Möglichkeit, eine Anfasshilfe durch einen effizienten Heißsiegelprozess auf die Schicht (PER) aufzubringen. Bevorzugt ist daher auf der nach außen weisenden Oberfläche des Verbundes aus den Schichten (PER) und (SR2) eine Anfasshilfe derart aufgebracht, dass zumindest ein Teil der Anfasshilfe auf der Schicht (PER) aufliegt. Zum anderen hat sich gezeigt, dass die partiell vorhandene Silikonschicht auch ein Aufbringen der Anfasshilfe mittels einer Silikon-basierten Klebmasse zulässt. Ebenfalls bevorzugt ist daher auf der nach außen weisenden Oberfläche des Verbundes aus den Schichten (PER) und (SR2) eine Anfasshilfe derart aufgebracht, dass zumindest ein Teil der Anfasshilfe auf der Schicht (SR2) aufliegt. Die partiell mit der Silikonschicht (SR2) bedeckte Schicht (PER) ermöglicht somit vorteilhaft das Anbringen eines Anfasser-Tabs auf zwei alternative Weisen: über einen Heißsiegelprozess oder über eine Silikonbasierte Klebmasse.

Die Schicht (PER) des erfindungsgemäßen Releaseliners ist in einer Ausführungsform durch einen Klebstoff mit der Folie (BF) verbunden. Es hat sich gezeigt, dass damit eine wesentlich verbesserte Verbundhaftung erzielt wird. Alternative Methoden zum Aufbau der Schichtabfolge Folie (BF) - Schicht (PER) sind beispielsweise Coextrusion der Schicht (PER) mit der Folie (BF) oder eine Extrusionsbeschichtung.

Der Klebstoff lässt sich als Kaschier- oder Laminierklebstoff ansehen und ist grundsätzlich in der Bandbreite einsetzbarer Klebstoffe nicht eingeschränkt, solange sich die Schicht (PER) und die Folie (BF) damit anforderungsgerecht verbinden lassen.

Als Klebstoff kommen grundsätzlich alle im Stand der Technik bekannten lösemittelhaltigen, lösemittelfreien und wässrigen Klebstoffe mit unterschiedlicher Polymerbasis, z.B. Polyurethan, Polyester, Polyethylen oder Ethylenvinylacetat, in Frage. Bevorzugt ist der Klebstoff ein Polyurethan-basierter Klebstoff. "Polyurethan-basiert" bedeutet hier, dass ein Polyurethan oder die Gesamtheit mehrerer Polyurethane den Hauptbestandteil der Polymerzusammensetzung dieses Klebstoffs bilden, also den größten Anteil an der Polymerzusammensetzung haben.

Lösemittelfreie Polyurethan-Klebstoffe können als Ein- oder Zwei-Komponentensysteme vorliegen. Weitere Unterschiede können sich aus der Struktur des Polyurethans und der Art der Vernetzung ergeben. Häufig werden folgende Polymere bevorzugt:
- 1-K System: Prepolymere mit geringem Molekulargewicht, NCO-terminiert, feuchtigkeitsvernetzend;
- 2-K System: Prepolymere mit NCO Endgruppen + Polyole.

Häufig werden aromatische Isocyanate verwendet; diese sind aber problematisch im Lebensmittelkontakt, da es dabei zur Bildung von primären aromatischen Aminen kommen kann. Gelegentlich kommen daher - insbesondere auch, wenn UV-Stabilität verlangt ist - aliphatische Isocyanate zum Einsatz. Grundsätzlich lassen sich mit aromatischen Isocyanaten bessere Haftung und schnellere Aushärtung erzielen.

Polyether-Polyurethane haben meistens eine höhere Temperaturstabilität als Polyester-Polyurethane. Oft besteht aber die Polyolkomponente aus einem Gemisch aus Polyester- und Polyether-Polyolen. Häufig werden auch tri- und höher funktionalisierte Polyole eingesetzt, um zusätzliche Vernetzungseffekte zu generieren, was sich wiederum häufig in höherer Temperaturstabilität auswirkt.

Der Klebstoff der hier beschriebenen Ausführungsform ist bevorzugt ein Polyether-Polyurethan-basierter Klebstoff, der auf einem lösemittelfreien 2-K System beruht. Es hat sich als vorteilhaft herausgestellt, einen mittels Klebstoff hergestellten Verbund aus der Folie (BF) und der Schicht (PER) mehrere Tage ruhen zu lassen, um das Erreichen der vollen Verbundfestigkeit abzuwarten. Ebenso hat es sich als vorteilhaft herausgestellt, die miteinander zu verklebenden Flächen vor dem Verkleben einer Corona-Vorbehandlung zu unterziehen.

Ein besonderer Vorteil einer Verklebung der Folie (BF) mit der Schicht (PER) besteht in der höheren Verbundfestigkeit gegenüber einer Coextrusion. Eine Coextrusion dieser Schichten hat sich als möglich erwiesen, führte jedoch zu geringeren Verbundfestigkeiten. Eine gewisse Verbesserung der Verbundfestigkeit kann durch Modifikation einer oder beider Schichten mit sogenannten Haftvermittlern, z.B. Maleinsäure-modifizierten Polymeren, oder durch Verwendung einer zusätzlichen Haftvermittlerschicht, des sogenannten Tie-Layers, erzielt werden. Trotz dieser Maßnahmen ist die Verbundhaftung für die Anwendung in einigen Fällen zu gering, so dass ein Delaminieren des Schichtverbundes (PER)-(SR2) beim Versuch, den Liner mittels eines Tabs vom Klebeband abzuziehen, beobachtet wurde.

Der erfindungsgemäße Releaseliner umfasst weiter eine auf der Schicht (PER) aufliegende, außen liegende Silikon-Releaseschicht (SR2). Diese Schicht weist Fehlstellen auf, so dass 46 bis 95 %, bevorzugt 60 bis 92 %, besonders bevorzugt 80 bis 90 %, der Oberfläche der Schicht (PER) mit der Schicht (SR2) bedeckt sind.

Unter "Fehlstellen" wird verstanden, dass die betreffende Schicht stellenweise durchbrochen ist und somit vom Material der Schicht vollständig oder - im Randbereich - bis zum Rand des Liners umgebene Bereiche aufweist, in denen das Material der Schicht (SR2) nicht vorhanden ist. An diesen Stellen liegt die nach außen weisende Oberfläche der Schicht (PER) frei. Die Schicht (SR2) lässt sich in diesem Sinne auch als "diskontinuierliche Schicht" bezeichnen.

Der mit der Schicht (SR2) bedeckte Anteil der Schicht (PER) wird durch Mikroskopie (100fache Vergrößerung), manuelle 3-Punkt-Flächenmessung und automatische Flächenberechnung ermittelt.

Das Material der Silikon-Releaseschicht (SR2) entspricht im Wesentlichen dem der Silikon-Releaseschicht (SR1), das dort Gesagte gilt grundsätzlich für die Silikon-Releaseschicht (SR2) entsprechend. Die Schichten (SR1) und (SR2) können hinsichtlich ihrer Zusammensetzung identisch oder unterschiedlich sein, bevorzugt sind sie unterschiedlich. Die Silikon-Releaseschicht (SR2) lässt sich bevorzugt auf ein UV-vernetzendes Silikonsystem zurückführen. Derartige Systeme umfassen, wie schon hierin beschrieben, photoaktive Katalysatoren, so genannte Photoinitiatoren, in Kombination mit UV-härtbaren kationisch vernetzenden Polysiloxanen auf Epoxid- und/oder Vinyletherbasis beziehungsweise mit UV-härtbaren, radikalisch vernetzenden Polysiloxanen wie etwa acrylatmodifizierten Polysiloxanen. Bevorzugt ist die Silikon-Releaseschicht (SR2) auf ein Epoxid-funktionalisiertes Polydimethylsiloxan in Kombination mit einem Photoinitiator zurückzuführen. Der Photoinitiator ist besonders bevorzugt eine photoaktive lodoniumsalz-Lösung.

Die Schichtdicke der Silikon-Releaseschicht (SR2) beträgt bevorzugt 200 nm bis 1.200 nm, besonders bevorzugt 300 bis 1000 nm, insbesondere 400 bis 800 nm.

Bevorzugt beträgt die Abzugskraft eines erfindungsgemäßen Releaseliners von einer auf dessen Schichtverbund PER-SR2 aufliegenden, Synthesekautschuk-basierten Haftklebmasse 20 cN/cm bis 12,5 N/cm, insbesondere 50 cN/cm bis 8,5 N/cm.

Gegenstand der Erfindung ist auch ein Verfahren zur Herstellung eines erfindungsgemäßen Releaseliners, das dadurch gekennzeichnet ist, dass zunächst der Releaseliner ohne die Schicht (SR2) hergestellt wird und anschließend die Schicht (SR2) auf die Schicht (PER) aufgebracht wird, indem
- eine UV-härtbare Silikonmasse im Flexodruck auf die Schicht (PER) aufgetragen und
- die Silikonmasse anschließend ausgehärtet wird.

Verfahren zum Aufbau des Releaseliners ohne die Schicht (SR2) sind grundsätzlich bekannt. In einer Ausführungsform wird die Folie (BF) zur Verfügung gestellt; diese wird in einem ersten Schritt mittels eines Klebstoffs mit der Schicht (PER) laminiert. Auf die verbleibende Seite der Folie (BF) wird anschließend die Silikonmasse für die Schicht (SR1) aufgetragen und nachfolgend ausgehärtet.

Bevorzugt werden beide freien Oberflächen des Verbundes aus der Folie (BF) und der Schicht (PER) vor der Silikonisierung physikalisch, insbesondere mittels Corona, vorbehandelt.

Die Silikon-Releaseschicht (SR2) wird erfindungsgemäß im Wege des Flexodrucks auf die Schicht (PER) aufgebracht.

In einer möglichen Ausführungsform wird dabei über eine Rasterwalze die unvernetzte Silikonmasse auf die mit dem Klischee versehene Walze aufgebracht. Dabei kann über das Kavitätsvolumen der Rasterwalze das finale Auftragsgewicht der Silikonmasse determiniert werden. Das Klischee überträgt das Silikon dann auf die auf einer Gegenwalze im Verbund mit der Folie (BF) und der Releaseschicht (SR1) aufliegende Schicht (PER). Über den Abstand zwischen Klischeewalze und Gegenwalze kann auch dabei das finale Auftragsgewicht der Schicht (SR2) beeinflusst werden.

Ein weiterer Gegenstand der Erfindung ist die Verwendung eines erfindungsgemäßen Releaseliners zum Bedecken bzw. zum Schutz einer Haftklebmasse, wobei die Haftklebmasse auf der Schicht (SR1) aufliegt. Die hervorragenden Trenneigenschaften der partiell silikonisierten Seite des Liners (Verbund (SR2)/(PER)) wirken sich dabei insbesondere aus, wenn eine zu einer Rolle aufgewickelte Haftklebmasse bzw. ein derart aufgewickeltes, mit der Haftklebmasse versehenes Klebeband abgerollt bzw. abgewickelt wird. Der erfindungsgemäße Releaseliner ist grundsätzlich zur Verwendung auf allen bekannten Haftklebmassen geeignet. Bevorzugt wird der erfindungsgemäße Releaseliner zum Bedecken bzw. zum Schutz einer Synthesekautschuk enthaltenden Haftklebmasse verwendet. Die Synthesekautschuk enthaltende Haftklebmasse enthält bevorzugt mindestens einen Synthesekautschuk, stärker bevorzugt mindestens zwei Synthesekautschuke zu insgesamt 30 bis 70 Gew.-%, insbesondere zu insgesamt 40 bis 60 Gew.-%, und mindestens ein klebkraftverstärkendes Harz zu 30 bis 70 Gew.-%, insbesondere zu 40 bis 60 Gew.-%, jeweils bezogen auf das Gesamtgewicht der Haftklebmasse. Selbstverständlich kann die Haftklebmasse weitere Additive wie Füllstoffe, Alterungsschutzmittel, Vernetzer etc. enthalten.

Besonders bevorzugt enthält die Haftklebmasse mindestens ein, bevorzugt mindestens zwei Vinylaromatenblockcopolymere. Ganz besonders bevorzugt enthalten diese Vinylaromatenblockcopolymere mindestens einen Polymerblock A, der überwiegend durch Polymerisation von Vinylaromaten gebildet ist, und mindestens einen Block B, der überwiegend durch Polymerisation von konjugierten Dienen gebildet ist. Als Vinylaromatenblockcopolymer wird dabei bevorzugt ein Blockcopolymer mit einem Aufbau A-B, A-B-A, (A-B)ₙ, (A-B)ₙX oder (A-B-A)ₙX eingesetzt,
worin
- die Blöcke A unabhängig voneinander für ein Polymer, gebildet durch Polymerisation mindestens eines Vinylaromaten,
- die Blöcke B unabhängig voneinander für ein Polymer, gebildet durch Polymerisation von konjugierten Dienen mit 4 bis 18 C-Atomen,
- X für den Rest eines Kopplungsreagenzes oder Initiators und
- n für eine ganze Zahl ≥ 2 stehen.

Die Vinylaromaten zum Aufbau des Blocks A umfassen bevorzugt Styrol, α-Methylstyrol und/oder andere Styrol-Derivate, insbesondere Styrol.

Die konjugierten Diene zum Aufbau des Blocks B sind bevorzugt ausgewählt aus der Gruppe bestehend aus Butadien, Isopren, Ethylbutadien, Phenylbutadien, Pentadien, Hexadien, Ethylhexadien und Dimethylbutadien sowie einer beliebigen Mischung dieser Monomere, wobei Butadien bevorzugt ist.

Das klebkraftverstärkende Harz ist bevorzugt zu mindestens 75 Gew.-%, bezogen auf den Gesamtharzanteil, ein Harz mit einem DACP (diacetone alcohol cloud point) von größer 0 °C, bevorzugt größer 10 °C, und einer Erweichungstemperatur (Ring & Ball) von größer gleich 70 °C, vorzugsweise größer gleich 100 °C. Besonders bevorzugt enthält das klebkraftverstärkende Harz zu mindestens 75 Gew.-% ein Kohlenwasserstoffharz, insbesondere ein Terpenharz.

In einer Ausführungsform ist die Haftklebmasse geschäumt. Geschäumte Haftklebemassensysteme sind seit längerem bekannt und im Stand der Technik beschrieben. Sie besitzen beispielsweise geringere Dichten als vergleichbare ungeschäumte Systeme und zeichnen sich typischerweise durch eine zerstörungsfreie Wiederablösbarkeit und Repositionierbarkeit aus. Grundsätzlich lassen sich Polymerschäume auf zwei Wegen herstellen. Zum einen durch die Einwirkung eines Treibgases, sei es als solches zugesetzt oder aus einer chemischen Reaktion resultierend, zum anderen durch die Einarbeitung von Hohlkugeln in die Werkstoffmatrix. Schäume, die auf letzterem Wege hergestellt werden, werden als syntaktische Schäume bezeichnet. Bei einem syntaktischen Schaum sind Hohlkugeln wie Glaskugeln oder keramische Hohlkugeln (Mikrokugeln) oder Mikroballons in einer Polymermatrix eingebunden. Dadurch sind bei einem syntaktischen Schaum die Hohlräume voneinander getrennt und die in den Hohlräumen befindlichen Substanzen (Gas, Luft) durch eine Membran von der umgebenden Matrix abgetrennt. Mit Mikrohohlkugeln geschäumte Massen zeichnen sich durch eine definierte Zellstruktur mit einer gleichmäßigen Größenverteilung der Schaumzellen aus. Mit Mikrohohlkugeln werden geschlossenzellige Schäume ohne Kavitäten erhalten, die sich im Vergleich zu offenzelligen Varianten unter anderem durch eine bessere Abdichtungswirkung gegen Staub und flüssige Medien auszeichnen. Darüber hinaus sind chemisch oder physikalisch geschäumte Materialien anfälliger für ein irreversibles Zusammenfallen unter Druck und Temperatur und zeigen häufig eine niedrigere Kohäsionsfestigkeit. Besonders vorteilhafte Eigenschaften lassen sich erzielen, wenn als Mikrokugeln zur Schäumung expandierbare Mikrokugeln (auch als "Mikroballons" bezeichnet) eingesetzt werden. Durch ihre flexible, thermoplastische Polymerschale besitzen derartige Schäume eine höhere Anpassungsfähigkeit als solche, die mit nicht expandierbaren, nicht polymeren Mikrohohlkugeln (beispielsweise Glashohlkugeln) gefüllt sind. Sie eignen sich besser zum Ausgleich von Fertigungstoleranzen, wie sie zum Beispiel bei Spritzgussteilen die Regel sind, und können aufgrund ihres Schaumcharakters auch thermische Spannungen besser kompensieren.

Bevorzugt ist die geschäumte Haftklebmasse mit Mikroballons geschäumt, sie enthält also expandierte Mikroballons. Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an unexpandierten Mikroballontypen kommerziell erhältlich, welche sich im Wesentlichen über ihre Größe und ihre zur Expansion benötigten Starttemperaturen (75 bis 220 °C) differenzieren. Ein Beispiel für kommerziell erhältliche unexpandierte Mikroballons sind die Expancel^{®} DU-Typen (DU = dry unexpanded) von der Firma Akzo Nobel. In der Typenbezeichnung Expancel xxx DU yy (Dry unexpanded) steht dabei "xxx" für die Zusammensetzung der Mikroballonabmischung, und "yy" für die Größe der Mikroballons im expandierten Zustand.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Selbstklebemasse geeignet.

Eine geschäumte erfindungsgemäße Selbstklebemasse SK1 kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite^{®} oder mit der Typenbezeichnung Expancel xxx DE yy (Dry Expanded) von der Firma Akzo Nobel kommerziell erhältlich. "xxx" steht für die Zusammensetzung der Mikroballonabmischung, "yy" steht für die Größe der Mikroballons im expandierten Zustand.

Der Anteil der Mikroballons in der geschäumten Haftklebmasse liegt bevorzugt bei bis zu 12 Gew.-%, stärker bevorzugt bei 0,25 Gew.-% bis 5 Gew.-%, noch bevorzugter bei 0,5 bis 4 Gew.-%, insbesondere bei 1 bis 3,5 Gew.-%, beispielsweise bei 2,0 bis 3,0 Gew.-%, jeweils bezogen auf die Gesamtzusammensetzung der Haftklebmasse. In diesen Bereichen lassen sich Haftklebmassen bereitstellen, die typischerweise eine besonders gute Balance zwischen Adhäsion und Kohäsion aufweisen.

Die geschäumte Haftklebmasse darf zusätzlich auch nicht-expandierbare Mikrohohlkugeln enthalten. Entscheidend ist nur, dass nahezu alle Gas beinhaltenden Kavernen durch eine dauerhaft dichte Membran geschlossen sind, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas.

Die geschäumte Haftklebmasse kann - unabhängig gewählt von anderen Additiven - auch Polymervollkugeln, Glashohlkugeln, Glasvollkugeln, keramische Hohlkugeln, keramische Vollkugeln und/oder Kohlenstoffvollkugeln ("Carbon Micro Balloons") enthalten.

Die absolute Dichte der geschäumten Haftklebmasse beträgt vorzugsweise 400 bis 990 kg/m³, bevorzugter 450 bis 800 kg/m³, noch bevorzugter 500 bis 700 kg/m³ und insbesondere 500 bis 600 kg/m³.

Die zur Verwendung mit dem erfindungsgemäßen Releaseliner vorgesehenen Haftklebmassen können selbstverständlich ohne (sogenanntes Transferklebeband) oder mit Träger verwendet werden. Als Träger kommen alle für diese Aufgabe bekannten Materialien in Betracht, insbesondere auch geschäumte, Poly(meth)acrylat-basierte Haftklebmassen.

Bevorzugt ist der erfindungsgemäße Releaseliner im Rahmen der erfindungsgemäßen Verwendung mit einer Anfasshilfe zur Vereinfachung des Abziehens des Releaseliners von der Haftklebmasse versehen. Die Anfasshilfe ist dabei auf der nach außen weisenden Oberfläche des Verbundes aus den Schichten (PER) und (SR2) derart aufgebracht, dass zumindest ein Teil der Anfasshilfe auf der Schicht (PER) aufliegt. Die Kombination aus jeweils partieller Polyethylen- und Silikon-Releasebeschichtung ermöglicht sowohl die Ausbildung einer hinreichenden und einstellbaren Trennkraft des Liners auch auf speziellen Klebmassen, wie sie für den Einsatz auf niederenergetischen Oberflächen vorgesehen sind, als auch eine Heißsiegelfähigkeit der Trennbeschichtung, die zum Anschweißen der Anfasshilfe erforderlich ist. Diese Eigenschaftskombination ließe sich weder mit einer Polyethylen-Trennbeschichtung alleine noch mit einer durchgehenden Silikon-Trennbeschichtung erzielen.

### Beispiele

### Aufbau der Releaseliner (wenn nicht anders angegeben: Angaben in Gew.-%)

### Liner 1:

Es wurde von einer dreischichtigen Blasfolie mit folgendem Aufbau ausgegangen:
- 20 µm Blend aus 40 % LLDPE (Eltex PF6130, INEOS) und 60 % PP (BA110CF, Borealis)
- 60 µm 92 % PP (BA110CF, Borealis) und 8 % Farbbatch
- 20 µm Blend aus 40 % LLDPE (Eltex PF6130, INEOS) und 60 % PP (BA110CF, Borealis).

Die vorgenannte Dreischichtfolie wurde einseitig Corona-vorbehandelt. Anschließend wurde ein Zwei-Komponenten-Polyurethan-Kaschierklebstoffsystem (Liofol UR 7780 / UR6080, Henkel) über Rasterwalzen bei 40 °C mit einem Flächengewicht von 2 g/m² auf die vorbehandelte Seite aufgetragen. Darauf wurde eine 28 µm dicke Blasfolie aus LDPE (Purell 1840H, LyondellBasell) kaschiert. Die Verklebung wurde 10 Tage bei Raumtemperatur ausgehärtet.

Die verbliebene Seite der vorstehenden Dreischichtfolie wurde vollflächig mit einem additionsvernetzenden Silikonsystem gemäß der untenstehenden Anleitung mit einem Flächengewicht von 1 g/m² beschichtet; das Silikonsystem wurde anschließend ausgehärtet.

Der bis hierhin erhaltene Schichtverbund wurde so auf eine Walze aufgelegt, dass die LDPE-Blasfolie von Walzenoberfläche wegwies.

Auf eine Rasterwalze mit definiertem Auftragsvolumen wurde ein unvernetztes, UVhärtbares Silikonsystem aufgetragen, überstehendes Silikon wurde mit einer Rakel entfernt. Von der Rasterwalze wurde diese Masse auf eine Flexodruck-Klischeewalze übertragen, die ein in Tabelle 1 angegebenes Muster aufwies.

Als Silikonsystem wurde SilForce UV9300 zusammen mit dem Photoinitiator UV9380C (jeweils von der Firma Momentive) verwendet. Das Mischungsverhältnis SilForce UV9300 : UV9380C betrug 100 : 3. Nach dem Übertrag von der Klischeewalze auf die LDPE-Schicht des Schichtverbundes wurde die Masse mit einer QuecksilberLampe aktiviert und gehärtet. Der Abstand zwischen Klischeewalze und Schichtverbund war in allen hier aufgeführten Beispielen konstant.

Die partiell silikonisierte Seite der so hergestellten Liner (siehe Tabelle) wurde jeweils mit der nachstehend beschriebenen Test-Haftklebmasse auf Basis von Synthesekautschuk laminiert (Normklima, 20 mm breite Streifen); der Verbund wurde anschließend 1, 3 und 7 Tage bei Raumtemperatur und 50 % Luftfeuchte gelagert.

### Herstellung des Testtapes

### Eingesetzte Rohstoffe:

Kraton^{®} D1101: Styrol-Butadien-Styrol-Triblockcopolymer der Firma Kraton Polymers mit 16 Gew.-% Diblock, Blockpolystyrolgehalt: 31 Gew.-%, Anteil an 1,2-verknüpftem konjugiertem Dien im Butadienblock: 10 Gew.-%
Kraton^{®} D1118: Styrol-Butadien-Styrol-Triblockcopolymer der Firma Kraton Polymers mit 78 Gew.-% Diblock, Blockpolystyrolgehalt: 33 Gew.-%, Anteil an 1,2-verknüpftem konjugiertem Dien im Butadienblock: 10 Gew.-%
Dercolyte A115: festes α-Pinen-Klebharz mit einer Ring und Ball-Erweichungstemperatur von 115 °C und einem DACP von 35 °C
Piccolyte^{®} A25: Polyterpenharz auf der Basis von α-Pinen mit einer Ring und Ball-Erweichungstemperatur von 22 bis 28 °C.
Expancel 920 DU40: unexpandierte Mikroballons.

### Rezeptur:

| | |
|---|---|
| Kraton^{®} D1101 | 25 Gew.-Teile |
| Kraton^{®} D1118 | 25 Gew.-Teile |
| Dercolyte A115: | 48 Gew.-Teile |
| Piccolyte A25: | 2 Gew.-Teile |
| Expancel 920DU40: | 3 Gew.-Teile |

### Verfahren:

Hierzu wurde zuerst eine 40 Gew.-%ige Klebelösung der angegebenen Rezeptur in Benzin/Toluol/Aceton hergestellt. Die Gewichtsanteile der gelösten Bestandteile beziehen sich dabei auf das Trockengewicht der resultierenden Lösung.

Die Lösung wurde anschließend mit den unexpandierten Mikroballons versetzt, wobei die Mikroballons als Anschlämmung in Benzin eingesetzt wurden. Der Gewichtsanteil der Mikroballons bezieht sich auf das Trockengewicht der eingesetzten Lösung, zu der sie gegeben wurden (d.h. das Trockengewicht der eingesetzten Lösung wird als 100% festgesetzt). Die erhaltene Mischung wurde dann mit einem Streichbalken auf einen PET-Liner, ausgerüstet mit einem trennenden Silikon, ausgestrichen; anschließend wurde bei 100 °C für 15 min das Lösungsmittel abgedampft und so die Masseschicht getrocknet. Daraufhin wurde auf die freie Oberfläche der hergestellten und getrockneten Klebmasseschicht ein zweiter derartiger PET-Liner kaschiert und die Klebmasseschicht anschließend für 5 min bei 150 °C zwischen den beiden Linern im Ofen geschäumt, so dass ein etwa 100 µm dicker erfindungsgemäßer Haftklebestreifen erhalten wurde. Durch mehrfache Lamination so hergestellter Schichten wurde die Zieldicke des Testtapes von 1.000 µm hergestellt. Die Abmessungen von 500 mm Länge und 20 mm Breite wurden durch Ausstanzen erhalten.

### Prüfmethoden

### - Dichte

Die Dichte einer Klebmasseschicht wird ermittelt durch Quotientenbildung aus Masseauftrag und Dicke der auf einen Träger oder Liner aufgetragenen Klebemassenschicht.

Der Masseauftrag kann durch Bestimmung der Masse eines bezüglich seiner Länge und seiner Breite definierten Abschnitts einer solchen auf einen Träger oder Liner aufgetragenen Klebemassenschicht bestimmt werden, abzüglich der (bekannten oder separat ermittelbaren) Masse eines Abschnitts gleicher Dimensionen des verwendeten Trägers bzw. Liners.

Die Dicke einer Klebmasseschicht kann durch Bestimmung der Dicke eines bezüglich seiner Länge und seiner Breite definierten Abschnitts einer solchen auf einen Träger oder Liner aufgetragenen Klebmasseschicht bestimmt werden, abzüglich der (bekannten oder separat ermittelbaren) Dicke eines Abschnitts gleicher Dimensionen des verwendeten Trägers bzw. Liners. Die Dicke der Klebemasseschicht lässt sich über handelsübliche Dickenmessgeräte (Taster-Prüfgeräte) mit Genauigkeiten von weniger als 1 µm Abweichung ermitteln. Im Rahmen der vorliegend beschriebenen Erfindung wurde das Präzisions-Dickenmessgerät Mod. 2000 F eingesetzt, das einen kreisrunden Taster mit einem Durchmesser von 10 mm (plan) aufweist. Die Messkraft beträgt 4 N. Der Wert wird 1 s nach Belastung abgelesen. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

### - Dicke

Wie bereits die Dicke einer Klebemasseschicht lässt sich auch die Dicke eines Haftklebestreifens bzw. einer Folienträgerschicht oder Liners über handelsübliche Dickenmessgeräte (Taster-Prüfgeräte) mit Genauigkeiten von weniger als 1 µm Abweichung ermitteln. Im Rahmen der vorliegend beschriebenen Erfindung wurde das Präzisions-Dickenmessgerät Mod. 2000 F eingesetzt, das einen kreisrunden Taster mit einem Durchmesser von 10 mm (plan) aufweist. Die Messkraft beträgt 4 N. Der Wert wird 1 s nach Belastung abgelesen. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

### - Anwendungstechnischer Test (Tabbing-Test)

Zehn Streifen des mit dem Liner versehenen Testtapes werden auf eine PP-Platte aufgebracht. Auf jeden Liner wird ein Tab als Anfasser an unterschiedlichen Positionen durch Verschweißen aufgebracht. Die Verschweißung der Tabs erfolgt jeweils auf der partiell silikonisierten Seite der Liner.

Die Verschweißung wird bei 190 °C, 3 bar Druck und 3 Sekunden Verschweißzeit mittels eines Metallstempels durchgeführt. Als Tab wird ein PET/PE-Laminat verwendet.

Mithilfe des Anfassers soll der Liner vom Testtape in einem Schritt entfernt werden. Bewertungsschema:
"+": Liner lässt sich durch das Tab zu 100% in einem Schritt vom Testtape entfernen, unabhängig von der Position des Tabs auf dem Testtape.
"-": Liner lässt sich nicht vom Testtape entfernen. Es kommt zum Abriss des Tabs vom Liner oder zum Spalten der einzelnen Schichten des Liners.

### - Abzugskraft (Liner Removal Force):

Dieser Test dient der Bestimmung der Kraft, die benötigt wird, um den Liner von einer auf ihm aufgebrachten Klebmasse abzuziehen. Er betrifft im Wesentlichen die Wechselwirkung zwischen der partiell silikonisierten Schicht und der darauf aufliegenden Haftklebmasse.

Die Abzugskraft der Liner wurde mit dem vorstehend beschriebenen Testklebeband bestimmt.

### Messung:

Die Probe wurde mit der freigelegten Klebschicht auf einer PE-Trägerplatte fixiert. Das Fixieren erfolgte so, dass ein kurzes Stück des zu untersuchenden Liners über die Platte hinaus ragte. Die Prüfplatte wurde dann, mit dem verlängerten Ende des zu untersuchenden Liners nach unten weisend, in die untere Klemmbacke einer Zugprüfmaschine (BZ2.5/TN1S, Fa. Zwick) eingespannt. Das verlängerte Ende des zu untersuchenden Liners wurde in die obere Backe geklemmt und mit einer Maschinengeschwindigkeit von 300 mm/min in einem Winkel von 180° abgezogen. Die dafür benötigte Kraft wurde gemessen.

Als gute, sehr praktikable Abzugskräfte werden Werte von 50 bis 1.250 cN/cm angesehen. Abzugskräfte von mehr als 13 N/cm sind nicht mehr praktikabel, weil der Kraftaufwand zum Abziehen des Releaseliners dann zu groß wird.

### Ergebnisse der Prüfungen

**Tabelle 1: Ergebnisse**

| | | | Abzugskraft (cN/cm) nach ... Tagen | | | |
|---|---|---|---|---|---|---|
| Nr. | Klischeedesign | Bedeckung mit Silikon (%) | 1 | 3 | 7 | Tabbing-Test |
| 1 (Vgl.) | 10 L / cm | 35 | 1.325 | -- | -- | + |
| 2 (Vgl.) | d = 1 mm | 45 | -- | -- | -- | + |
| 3 | 50 L / cm | 46 | 1.036 | 1.107 | 1.070 | + |
| 4 | d = 0,2 mm | 47 | 1.189 | 1.180 | 1.203 | + |
| 5 | d=1mm | 89 | 177 | 331 | 393 | + |
| 6 | 10 L / cm | 89 | 72 | 84 | 78 | + |
| 7 (Vgl.) | d = 0,2 mm | 97 | 8 | 12 | 9 | - |
| 8 (Vgl.) | 50 L / cm | 100 | 6 | 9 | 7 | - |

| | | | | | | |
|---|---|---|---|---|---|---|
| L/cm - Linien/cm d - Durchmesser aufgebrachter Punkte aus dem Silikon | | | | | | |

In den Beispielen 1 und 2 waren die Klebkräfte zwischen Liner und Haftklebmasse zum Teil so stark, dass eine Trennung mit sinnvollem Kraftaufwand nicht mehr möglich war.

## Patentansprüche

1. Releaseliner zur Verwendung auf Haftklebmassen, umfassend
- eine außen liegende, durchgehende Silikon-Releaseschicht (SR1);
- eine Folie (BF), enthaltend zu mindestens 80 Gew.-%, bezogen auf das Gesamtgewicht der Folie, ein Polyolefin oder Polyethylenterephthalat;
- eine Schicht (PER), enthaltend zu mindestens 80 Gew.-%, bezogen auf das Gesamtgewicht der Schicht (PER), Polyethylen; und
- eine auf der Schicht (PER) aufliegende, außen liegende Silikon-Releaseschicht (SR2);
wobei die Schicht (SR2) derart Fehlstellen aufweist, dass 46 bis 95 % der Oberfläche der Schicht (PER) mit der Schicht (SR2) bedeckt sind.

2. Releaseliner gemäß Anspruch 1, **dadurch gekennzeichnet, dass** das Polyethylen der Schicht (PER) ein low density-Polyethylen (LDPE) ist.

3. Releaseliner gemäß mindestens einem der vorstehenden Ansprüche, **dadurch gekennzeichnet, dass** die Schicht (PER) aus einer LDPE-Folie mit einer Dicke von 10 bis 45 µm besteht.

4. Releaseliner gemäß mindestens einem der vorstehenden Ansprüche, **dadurch gekennzeichnet, dass** auf der nach außen weisenden Oberfläche des Verbundes aus den Schichten (PER) und (SR2) eine Anfasshilfe derart aufgebracht ist, dass zumindest ein Teil der Anfasshilfe auf der Schicht (PER) aufliegt.

5. Releaseliner gemäß mindestens einem der vorstehenden Ansprüche, **dadurch gekennzeichnet, dass** die Folie (BF) zu insgesamt mindestens 80 Gew.-%, bezogen auf das Gesamtgewicht der Folie, Polyethylen und Polypropylen enthält.

6. Releaseliner gemäß mindestens einem der vorstehenden Ansprüche, **dadurch gekennzeichnet, dass** die Folie (BF) eine Dreischichtfolie ist, deren zentrale Schicht zu mindestens 60 Gew.-%, bezogen auf das Gesamtgewicht der Schicht, Polypropylen enthält.

7. Releaseliner gemäß Anspruch 6, **dadurch gekennzeichnet, dass** die Folie (BF) zwei äußere Schichten aus einem Polyethylen-Polypropylen-Blend umfasst.

8. Verfahren zur Herstellung eines Releaseliners gemäß mindestens einem der vorstehenden Ansprüche, **dadurch gekennzeichnet, dass** zunächst der Releaseliner ohne die Schicht (SR2) hergestellt wird und anschließend die Schicht (SR2) auf die Schicht (PER) aufgebracht wird, indem
- eine UV-härtbare Silikonmasse im Flexodruck auf die Schicht (PER) aufgetragen und
- die Silikonmasse anschließend ausgehärtet wird.

9. Verwendung eines Releaseliners gemäß mindestens einem der Ansprüche 1 bis 7 oder hergestellt nach einem Verfahren gemäß Anspruch 8 zum Bedecken einer Synthesekautschuk-basierten Haftklebmasse, wobei die Haftklebmasse auf der Silikon-Releaseschicht (SR1) aufliegt.

## Claims

1. Release liner for use on pressure-sensitive adhesives, comprising
- an outer, continuous silicone release layer (SR1);
- a film (BF) containing at least 80% by weight, based on the total weight of the film, of a polyolefin or polyethylene terephthalate;
- a layer (PER) containing at least 80% by weight, based on the total weight of the layer (PER), of polyethylene; and
- an outer silicone release layer (SR2) on top of the layer (PER);
wherein the layer (SR2) has vacancies such that 46% to 95% of the surface of the layer (PER) is covered with the layer (SR2).

2. Release liner according to Claim 1, **characterized in that**
the polyethylene of the layer (PER) is a low-density polyethylene (LDPE).

3. Release liner according to at least one of the preceding claims, **characterized in that** the layer (PER) consists of an LDPE film having a thickness of 10 to 45 µm.

4. Release liner according to at least one of the preceding claims, **characterized in that** the outward-facing surface of the assembly composed of the layers (PER) and (SR2) bears a grip aid applied such that at least part of the grip aid is on top of the layer (PER).

5. Release liner according to at least one of the preceding claims, **characterized in that** the film (BF) contains a total of at least 80% by weight, based on the total weight of the film, of polyethylene and polypropylene.

6. Release liner according to at least one of the preceding claims, **characterized in that** the film (BF) is a three-layer film whose central layer contains at least 60% by weight, based on the total weight of the layer, of polypropylene.

7. Release liner according to Claim 6, **characterized in that** the film (BF) comprises two outside layers of a polyethylene-polypropylene blend.

8. Process for producing a release liner according to at least one of the preceding claims, **characterized in that** first the release liner is produced without the layer (SR2) and then the layer (SR2) is applied to the layer (PER), by
- applying a UV-curable silicone compound to the layer (PER) by flexographic printing and
- then curing the silicone compound.

9. Use of a release liner according to at least one of Claims 1 to 7 or produced by a process according to Claim 8 for covering a synthetic rubber-based pressure-sensitive adhesive, wherein the pressure-sensitive adhesive is on top of the silicone release layer (SR1).

## Revendications

1. Revêtement antiadhésif destiné à être utilisé sur des masses autoadhésives, comprenant
- une couche antiadhésive (SR1) de silicone externe, continue ;
- une feuille (BF), contenant une polyoléfine ou du poly(téréphtalate d'éthylène) à raison d'au moins 80% en poids, par rapport au poids total de la feuille ;
- une couche (PER) contenant du polyéthylène à raison d'au moins 80% en poids, par rapport au poids total de la couche (PER) ; et
- une couche antiadhésive (SR2) de silicone, externe, située sur la couche (PER) ;
la couche (SR2) présentant des défauts tels que 46 à 95% de la surface de la couche (PER) sont recouverts par la couche (SR2).

2. Revêtement antiadhésif selon la revendication 1,
**caractérisé en ce que**
le polyéthylène de la couche (PER) est un polyéthylène basse densité (LDPE).

3. Revêtement antiadhésif selon au moins l'une des revendications précédentes, **caractérisé en ce que** la couche (PER) est constituée par une feuille de LDPE présentant une épaisseur de 10 à 45 µm.

4. Revêtement antiadhésif selon au moins l'une des revendications précédentes, **caractérisé en ce qu'**une aide à la préhension est appliquée sur la surface orientée vers l'extérieur du composite constitué par les couches (PER) et (SR2) de telle sorte qu'au moins une partie de l'aide à la préhension est située sur le couche (PER).

5. Revêtement antiadhésif selon au moins l'une des revendications précédentes, **caractérisé en ce que** la feuille (BF) contient du polyéthylène et du polypropylène à raison d'au total au moins 80% en poids, par rapport au poids total de la feuille.

6. Revêtement antiadhésif selon au moins l'une des revendications précédentes, **caractérisé en ce que** la feuille (BF) est une feuille à trois couches, dont la couche centrale contient du polypropylène à raison d'au moins 60% en poids, par rapport au poids total de la couche.

7. Revêtement antiadhésif selon la revendication 6, **caractérisé en ce que** la feuille (BF) comprend deux couches externes constituées par un mélange de polyéthylène-polypropylène.

8. Procédé de fabrication d'un revêtement antiadhésif selon au moins l'une des revendications précédentes, **caractérisé en ce que** le revêtement antiadhésif est d'abord fabriqué sans la couche (SR2), puis la couche (SR2) est appliquée sur la couche (PER), **en ce que**
- une masse de silicone durcissant aux UV est appliquée sur la couche (PER) par impression flexographique et
- la masse de silicone est ensuite durcie.

9. Utilisation d'un revêtement antiadhésif selon au moins l'une des revendications 1 à 7 ou fabriqué selon un procédé selon la revendication 8 pour le recouvrement d'une masse autoadhésive à base de caoutchouc de synthèse, la masse autoadhésive étant située sur la couche antiadhésive (SR1) de silicone.
